# EUROPÄISCHE PATENTSCHRIFT

(11) **EP 0 736 953 B1**
(45) Veröffentlichungstag und Bekanntmachung des Hinweises auf die Patenterteilung: **13.09.2000**
(21) Anmeldenummer: 96810176.6
(22) Anmeldetag: 20.03.1996
(51) Int. Cl.: H02K 1/26, H02K 17/42, H02K 3/50, H02K 1/30, H02K 3/51

(54) **Rotor einer elektrischen Maschine**
Rotor of an electric machine
Rotor pour machine électrique

(30) Priorität: 08.04.1995 DE 19513457
(43) Veröffentlichungstag der Anmeldung: 09.10.1996
(73) Patentinhaber: ASEA BROWN BOVERI AG, 5400 Baden (CH)
(72) Erfinder: Schwanda, Josef, 5242 Lupfig (CH); Vögele, Hans, Dr., 4353 Leibstadt (CH)
(74) Vertreter: Kaiser, Helmut, Dr.

(56) Entgegenhaltungen:
- DE-B- 1 178 143
- DE-C- 542 237
- DE-C- 701 612
- PATENT ABSTRACTS OF JAPAN vol. 013, no. 046 (E-711), 2.Februar 1989 & JP 63 240343 A (TOSHIBA CORP), 6.Oktober 1988,

## Beschreibung

Die Erfindung bezieht sich auf einen Rotor einer elektrischen Maschine, insbesondere Motor-Generator für Pumpspeicherwerke, mit einem auf einer Nabe angeordneten, in axialer und in Umfangsrichtung gesicherten Rotorkörper, der aus lamellierten Blechen aufgebaut und durch axial verlaufende erste Zugbolzen zusammengehalten ist, mit Nuten am äusseren Umfang des Rotorkörpers, in welchen eine Rotorwicklung eingelegt und dort gegen Fliehkrafteinwirkung gehalten ist, wobei die aus dem Rotorkörper axial austretenden, den Wickelkopf bildenden Wicklungsenden durch einen Stützring aufweisende Abstützmittel gegen Fliehkrafteinwirkung gesichert sind, welcher Stützring zugleich Pressplatte für den Rotorkörper ist.

Die Erfindung geht dabei aus von einem Stand der Technik, wie er sich beispielsweise aus dem Buch von Wiedemann/Kellenberger "Konstruktion elektrischer Maschinen", Springer-Verlag Berlin, Heidelberg, New York, 1967, Seiten 377 bis 380, insbesondere Abb. 375 auf Seite 378, ergibt. Das Dokument DE-C-701 612 beschreibt eine Halterung für Sperlenköpfe, bei der den Wickelkopf radial durchsetzende Zugbolzen mit einem Wicklungsträgerring verschraubt sind.

### TECHNOLOGISCHER HINTERGRUND UND STAND DER TECHNIK

Aus betriebstechnischen Gründen (optimaler Wirkungsgrad, Lastregulierung im Pumpenbetrieb, Netzstabilität) gibt es einen wachsenden Bedarf an drehzahlvariablen Motor-Generatoren hauptsächlich für Pumpspeicherwerke. Derartige Maschinen werden aus Kostengründen meist als doppelt gespeiste Schleifringläufer-Asynchronmaschine ausgeführt.

Bei solchen Maschinen sind der Rotor und dort insbesondere dessen Rotorwickelkopf extremen mechanischen und thermischen Belastungen ausgesetzt. Ueblicherweise erfolgt bei Asynchronmaschinen die Wickelkopfabstützung gegen Fliehkräfte mit Bandagen aus vorgespanntem Stahldraht in Kombination mit einem massiven einteiligen Stahlring, der gleichzeitig Pressring für den geblechten Rotor ist (vgl. a.a.O, Abb. 375a auf Seite 378). Die Grenzen dieser Ausführung sind durch die aufwendigen Montagehilfsmittel, die Transportabmessungen und durch die Gewichtslimitierung des Rotors gegeben. Für Rotoren für Wasserkraftmaschinen mit grossen Dimensionen muss der Zusammenbau direkt auf einem Montageplatz im Kraftwerk erfolgen können. Darüber hinaus beeinträchtigen grosse massive Stahlringe die Durchströmung des Wickelkopfes und damit dessen Kühlung.

### KURZE DARSTELLUNG DER ERFINDUNG

Der Erfindung liegt die Aufgabe zugrunde, einen Rotor einer elektrischen Maschine, insbesondere Motor-Generator für Pumpspeicherwerke, zu schaffen, der ohne aufwendige Montage-Hilfsmittel einfach herzustellen ist, und eine allen Betriebsbeanspruchungen standhaltende Abstützung der Wickelköpfe aufweist, die auch die Kühlung der Wickelköpfe nicht einschränkt.

Diese Aufgabe wird erfindungsgemäss dadurch gelöst, dass an den Endblechen des Rotorkörpers Pressfinger angeordnet sind, dass der Stützring mindestens aus zwei von in Axialrichtung beabstandeten Ringen besteht, die sich an ihrem Innenumfang auf der Nabe abstützen, wobei die Ringe im achsnahen Abschnitt des Rotorkörpers zusammen mit den Pressfingern mit dem den Rotorkörper axial durchsetzenden ersten Zugbolzen zusammengespannt sind, dass im achsferneren Abschnitt zweite Zugbolzen vorgesehen sind, welche nur die besagten Ringe axial durchsetzen und die Ringe axial zusammenspannen, dass dritte, den Wickelkopf radial durchsetzende Zugbolzen vorgesehen sind, welche zumindest am Aussenumfang des axial gesehen äussersten Ringes angreifen.

Nach einer ersten Weiterbildung des Erfindungsgegenstandes sind am Aussenumfang aller Ringe eine Vielzahl in Umfangsrichtung verteilte, axial verlaufende, miteinander fluchtende, halbgeschlossene Nuten vorgesehen, in welche je ein mit radial verlaufenden Gewindebohrungen versehenes Lineal geschoben ist, in welche Gewindebohrungen die besagten dritten Zugbolzen eingeschraubt sind. Dies ergibt eine einfach herzustellende und sichere radiale Abstützung.

Vorteilhafterweise ist der den Pressfingern unmittelbar benachbarte Ring von diesem distanziert, und die zweiten Zugbolzen weisen am rotorkörperseitigen Ende Schraubenmuttern auf, deren Höhe der besagten Distanz entsprechen. Auf diese Weise wird zusätzlich Pressdruck auf die Pressfinger erzeugt, der noch dadurch verbessert werden kann, wenn in Radialrichtung gesehen mindestens zwei zweite Zugbolzen vorgesehen sind und die Höhe der Muttern im achsnahen Abschnitt kleiner ist als im achsferneren Abschnitt. Auf diese Weise erfährt die Ringanordnung beim Vorspannen eine Stülpung. Die Stülpkraft wirkt als Presskraft auf die Pressfinger bzw. auf den Flächenschwerpunkt des Rotorringes.

Unter Umständen kann es sich erweisen, dass die Ringanordnung für sich einen zu kleinen (wirksamen) Querschnitt hat, um alleine als Vorspannelement zu wirken. Eine Weiterbildung der Erfindung sieht daher vor, zur zusätzlichen Verspannung im achsferneren Abschnitt vierte Zugbolzen vorzusehen, die sowohl die Ringe als den Rotorkörper, nicht jedoch die Pressfinger axial durchsetzen, welche vierte Zugbolzen gegenüber dem Rotorkörper als auch gegenüber den Ringen elektrisch isoliert sind.

Die Ringanordnung wird mit Vorteil in ähnlicher Weise auf der Nabe axial und in Umfangsrichtung fixiert wie der Rotorkörper.

Der Rotorkörper und die Tragringanordnung werden so dimensioniert, dass sich beide im Betrieb radial gleichmässig dehnen. Kleine eventuell auftretende Differenzdehnungen zwischen dem Rotorring und der Ringanordnung können vorteilhaft durch Einlegen von Wellfedern aus Isoliermaterial, die in den Nutgrund der Rotorwicklung eingesetzt werden, aufgenommen werden.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen vereinfachten Längsschnitt durch den Rotor eines Motor-Generators;
- Fig.2: einen Querschnitt durch die Verbindungsstelle von Nabe und Rotorkörper der Maschine nach Fig.1 längs deren Linie AA;
- Fig.3: eine perspektive Darstellung der Verbindungsstelle gemäss Fig.2;
- Fig.4: einen Längsschnitt durch das rechte Rotorende der Maschine nach Fig.1 in vergössertem Massstab;
- Fig.5: einen Querschnitt durch den Wickelkopf und die zugehörige Abstützung gemäss Fig.4 längs deren Linie BB;
- Fig.6: eine Draufsicht auf den Wickelkopf der Maschine;
- Fig.7: einen Längsschnitt durch das rechte Rotorende analog Fig.4 mit einem zusätzlichen isolierten Zugbolzen im achsferneren Abschnitt;
- Fig.8: einen Querschnitt durch den Wickelkopf und die zugehörige Abstützung gemäss Fig.7 längs deren Linie CC.

### WEGE ZUR AUSFÜHRUNG DER ERFINDUNG

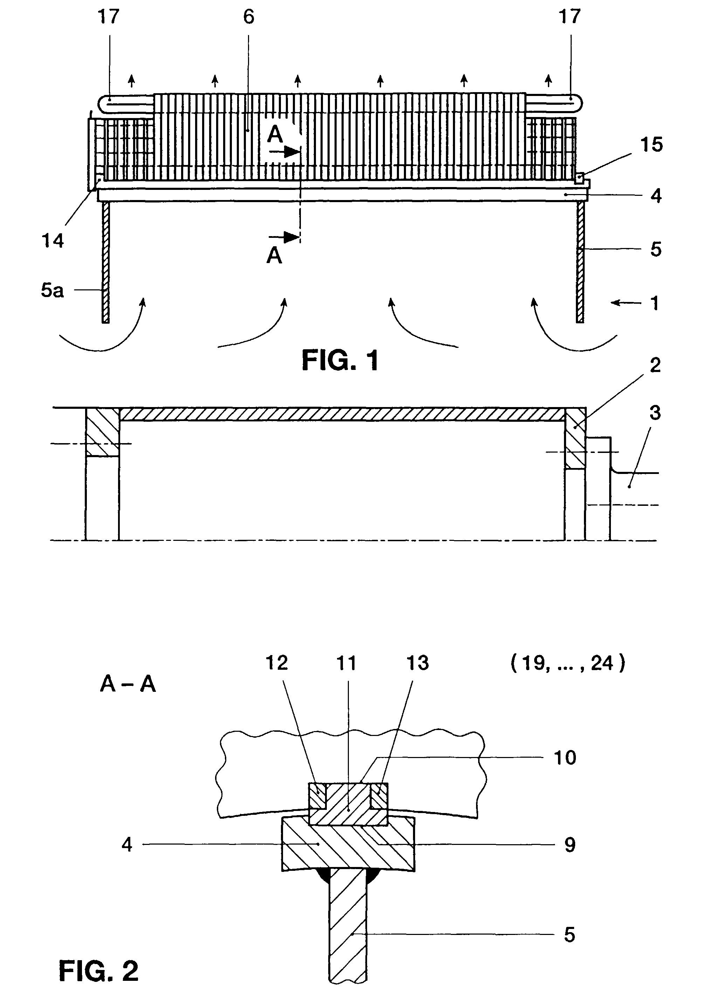

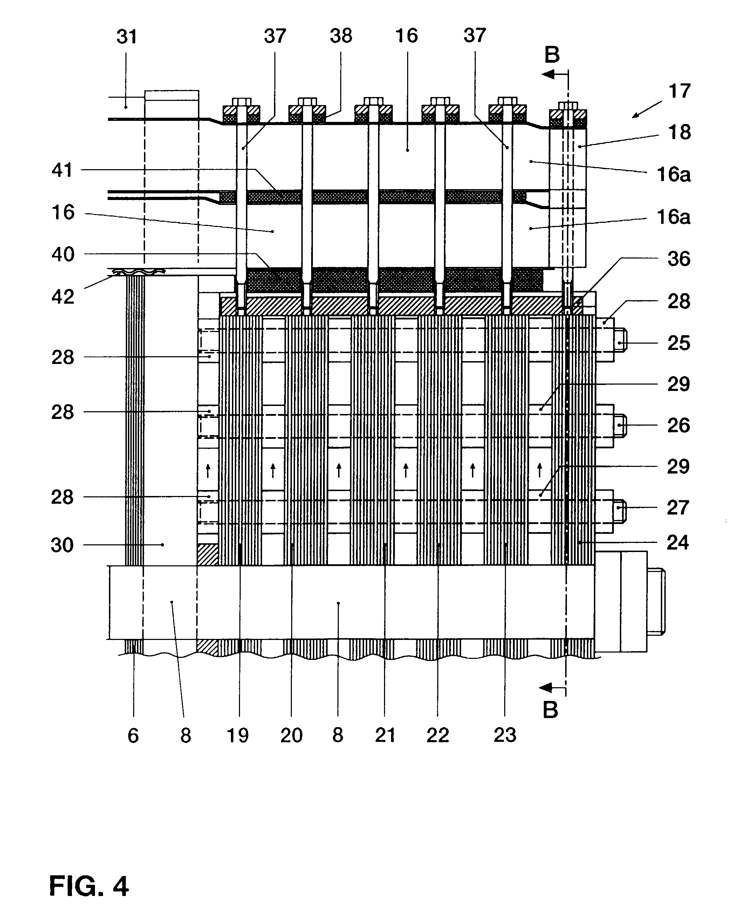

In Fig.1 der Zeichnung ist der Rotor eines Motor-Generators in stark schematischer Form dargestellt. Er umfasst eine Rotornabe 1 mit einem inneren Nabenteil 2, an den die Welle 3 einer nicht dargestellten Wasserturbine angeflanscht ist, und einen äusseren Nabenteil, der aus einer Vielzahl gleichmässig über den Umfang verteilter Balken besteht und im weiteren der Einfachheit halber mit Nabe 4 bezeichnet ist. Beide Nabenteile sind mittels Armen 5, vorzugsweise Schrägarmen, untereinander verbunden, die stirnseitig von Deckplatten 5a abgedeckt sind. Diese Deckplatte reicht nicht bis an den inneren Nabenteil. Im Betrieb der Maschine wird aufgrund der Ventilationswirkung Luft von aussen in den Raum zwischen den Schrägarmen 5 und Deckplatten 5a angesaugt und durchströmt den am Aussenumfang der Nabe 4 befestigten Rotorkörper 6. Er besteht aus segmentierten Blechen 7, die mit den Rotorkörper 6 durchsetzenden Zugbolzen (vgl. z.B. Fig.4, Position 8) zusammengepresst sind. Der Rotorkörper 6 ist dabei in axial distanzierte Teilblechkörper (in Fig.1 nur angedeutet) unterteilt, die zwischen sich radiale Kühlschlitze freilassen, durch welche die Kühlluft nach aussen in den Maschinenluftspalt strömen kann.

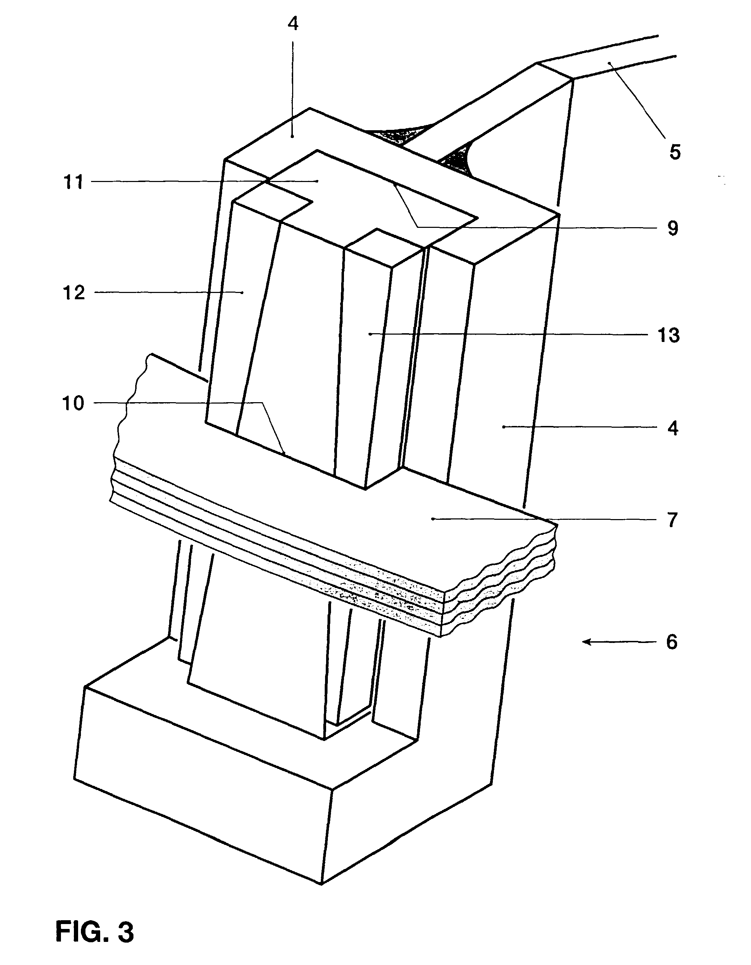

Die Befestigung des Rotorkörpers 6 auf der Nabe 4 erfolgt in bekannter Weise über eine Keilanordnung, wie sie in Fig.2 und 3 veranschaulicht ist. Aussen an der Nabe 4 sind erste axial verlaufende Nuten 9 mit Rechteckquerschnitt vorgesehen, die zweiten Nuten 10 ebenfalls mit Rechteckquerschnitt am Innenumfang des Rotorkörpers 6 gegenüberliegen. In die ersten Nuten ist ein Keil 11 mit T-förmigen Querschnitt eingelegt. Mittels Treibkeilen 12, 13, welche im eingetriebenen Zustand den Keil 11 zum einem Quader ergänzen, ist der Rotorkörper 6 in Umfangsrichtung an der Nabe 4 fixiert. Durch die Rechteckform der Keilanordnung ist gewährleistet, dass radiale Relativbewegungen - seien sie temperatur- und/oder fleihkraftbedingt - zwischen Nabe 4 und Rotorkörper 6 möglich sind. Die Festlegung des Rotorkörpers 6 auf der Nabe 4 erfolgt an einem Nabenende durch einen Bund 14, am anderen Nabenende durch am Aussenumfang der Nabe 4 eingehängte axial gesicherte Gegenplatten 15, die über den Umfang der Nabe 4 verteilt sind.

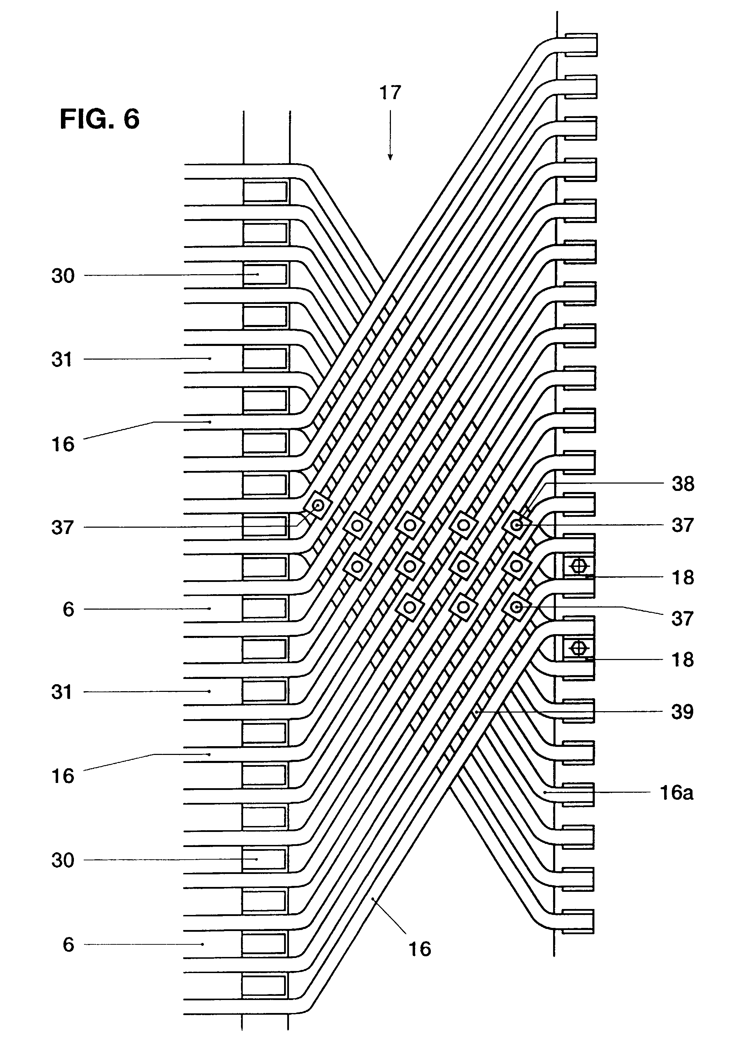

Am Aussenumfang des Rotorkörpers 6 ist eine im Beispielsfall zweischichtige Rotorwicklung 16 in Nuten angeordnet und in diesen mittels Nutkeilen gehalten. Die aus dem Rotorkörper axial austretenden, den Wickelkopf 17 bildenden Wicklungsenden 16a sind in bekannter Weise mittels Oesen 18 elektrisch und mechanisch verbunden, wobei eine Oese 18 das Leiterende eines aus einer Nut austretenden Leiters der unteren Lage mit dem Leiterende aus einer entfernten Nut austretenden Leiters der oberen Lage verbindet (vgl. Fig.6). Auch diese Ausbildung und elektrische Verschaltung im Wickelkopf ist zum Stand der Technik zu zählen und nicht Gegenstand der Erfindung.

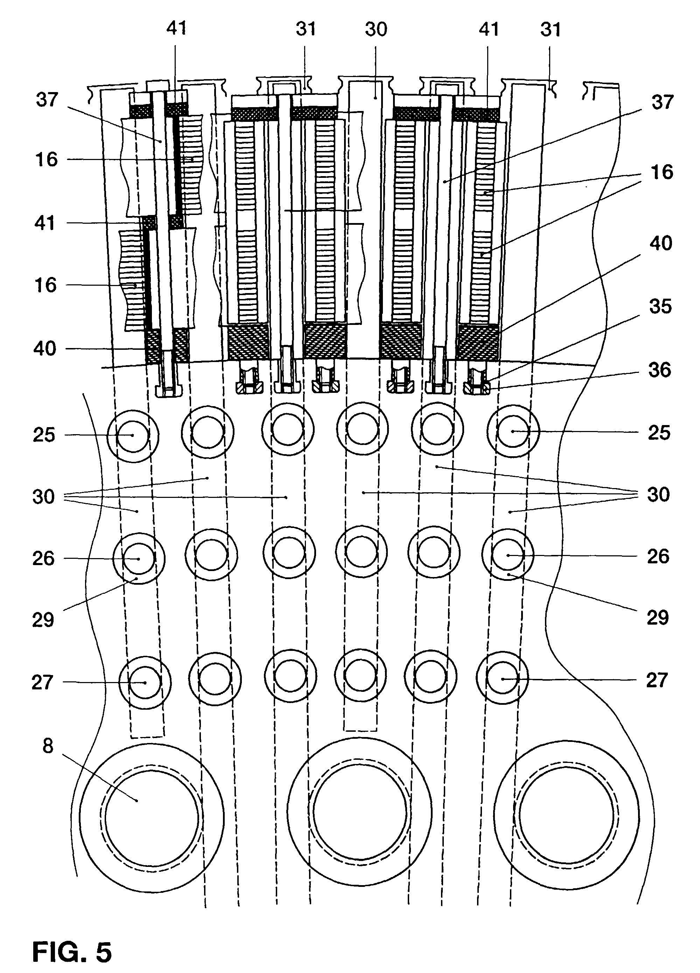

Wie ein Blick auf den (nur teilweise dargestellten) Wickelkof 17 erhellt, ist es zwingend erforderlich, den Wickelkopf gegen Fliehkrafteinwirkungen abzustützen. Nachdem - wie bereits einleitend dargelegt wurde - Bandagen in Kombination mit massiven Abstützringen, die gleichzeitig auch die Funktion einer Pressplatte übernehmen, nicht in Frage kommen, sieht nun die Erfindung vor, die Abstützung mit einer Ringanordnung zu bewerkstelligen, die aus mehreren separaten Ringen 19,...,24 besteht und im nachfolgenden mit Tragring bezeichnet wird Die Ringe 25 bis 27 sind aus 2 bis 6 mm dicken Blechsegmenten in der Art des Rotorkörpers zusammengesetzt. Die Blechsegmente einer Lage sind dabei gegenüber den Segementen der benachbarten Lage in Umfangsrichtung versetzt. Die im Beispielsfall sechs Ringe sind mittel vorgespannter Zugbolzen 25, 26, 27 und Muttern 28 zu einem homogenen Tragring verpresst. Wie aus Fig.5 hervorgeht sind die Zugbolzen 25 - 27 in Umfangsrichtung gleichmässig verteilt. Distanzstücke 29 in Gestalt von Rohrstücken zwischen den Ringen 19 und 20, 20 und 21, 21 und 22, 22 und 23 sowie 23 und 24 sorgen für eine Distanzierung. Anstelle von Distanzrohren kann auch eine radial verlaufende Distanzplatte , die von den drei Zugbolzen 25 bis 27 durchsetzt ist, verwendet werden. Auf diese Weise kann Kühhluft von der Nabe zum Wickelkopf 17 strömen.

Der Tragring wird als Ganzes auf die Nabe 4 aufgeschoben und in der selben Weise auf der Nabe 4 in Umfangsrichtung und in Axialrichtung fixiert, wie es im Zusammenhang mit der Befestigung des Rotorkörpers 6 anhand der Figuren 2 und 3 beschrieben wurde.

Damit nun der Tragring seine erste Funktion (Pressen des Rotorkörpers 6) erfüllen kann, sind auf der Stirnfläche des letzten Blechs des Rotorkörpers 6 radial verlaufende Pressfinger 30 angeordnet, z.B. mit diesem verschweisst. Diese Pressfinger 30 reichen im achsfernen Bereich der Rotorkörpers zwischen den benachbarten Wicklungsleitern 16 hindurch bis nahezu an das äussere Ende der Nutzähne 31 heran. Im achsnäheren Abschnitt enden sie dicht vor den Zugbolzen 8 bzw. zwischen diesen hindurch bis zur Nabe (vgl. Fig.5). Mit den den gesamten Rotorkörper 6 durchsetzenden Zugbolzen 8 wird nun der Tragring an die Pressfinger 30 und damit auch den Rotorkörper 6 gepresst. Die Anpresskraft im achsnahen Bereich reicht hierzu völlig aus.

Um sicherzustellen, dass auch im achsferneren Bereich, also im Bereich der Zugbolzen 26 und vor allem dem radial am weitesten aussen liegenden Zugbolzen 25 eine ausreichende Presskraft auf den Rotorkörper 6 einwirken kann, sieht eine Weiterbildung der Erfindung vor, die Höhe der den auf unterschiedlichen radialen Höhen liegenden Muttern 28 der Zugbolzen 25, 26 und 27 so zu bemessen, dass die radial aussenliegenden Muttern höher sind als die radial innenliegenden Muttern, oder bei Verwendung von Muttern gleicher Höhe unterschiedliche Unterlagen (in Fig.5 nicht ausdrücklich dargestellt) zu verwenden. Der Tragring ist mit den Zugbolzen 25 bis 27 definiert zusammengespannt. Er erfährt beim Verspannen mit den Zugbolzen 8 eine Stülpung. Die Stülpkraft wirkt als Presskraft auf die Pressfinger 30 bzw. auf den Flächenschwerpunkt des Rotorkörpers.

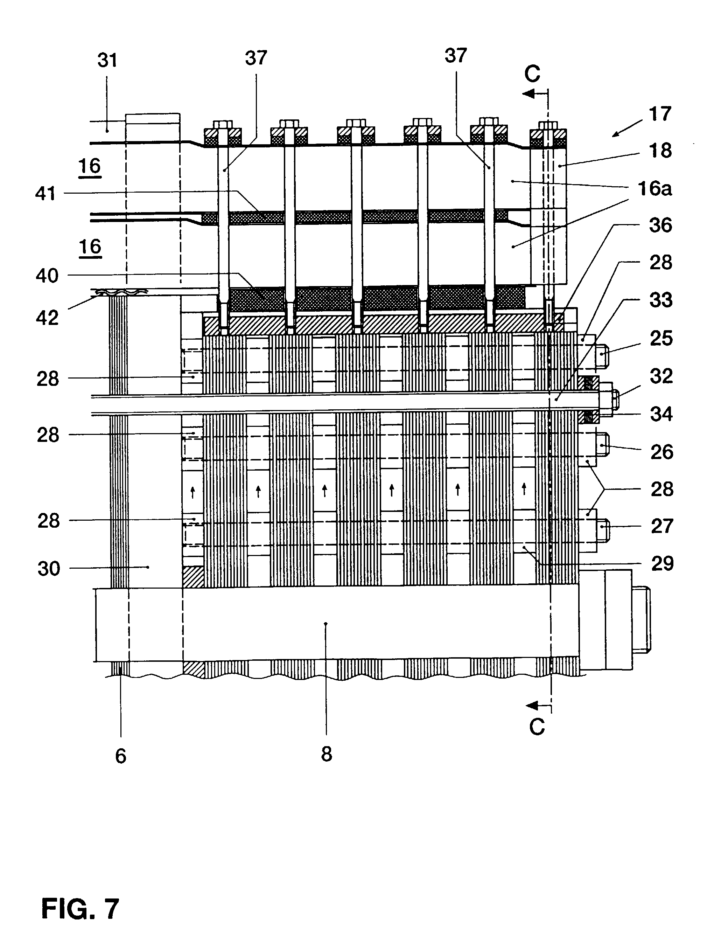

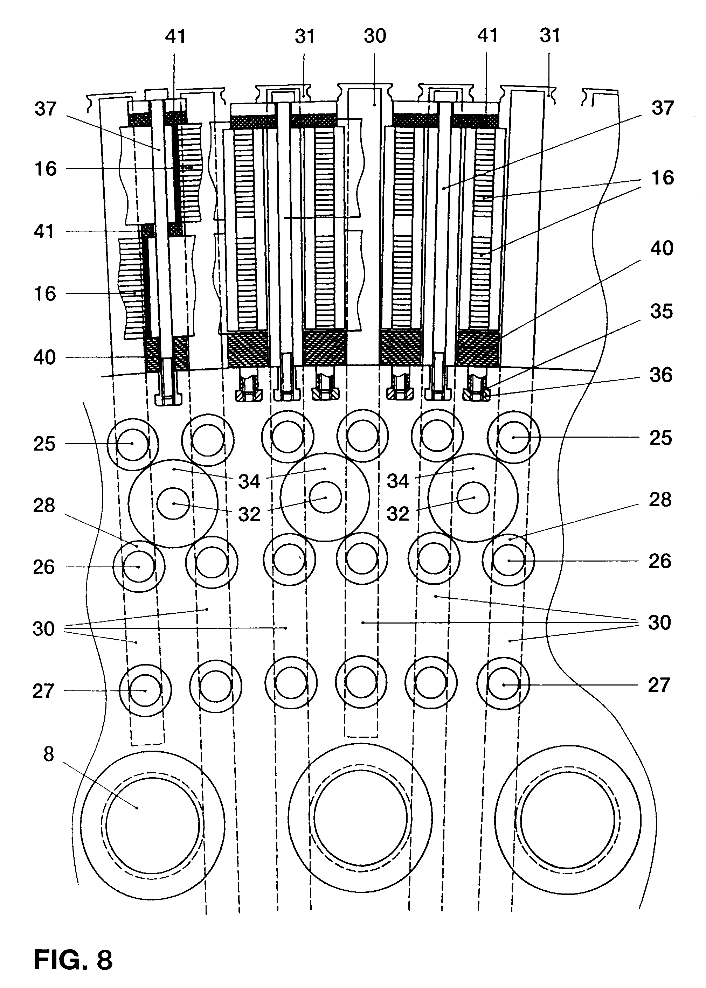

Sollte es sich erweisen, dass der Tragring allein zu wenig Presskraft auf die radial weiter aussenliegenden Pressfingerabschnitte auszuüben imstande ist, z.B. wenn er einen zu kleinen wirksamen Querschnitt hat, können gemäss Fig.7 und 8 zusätzliche Zugbolzen 32 vorgesehen werden. Diese Durchsetzen die beiden Tragringe, d.h. alle sechs Ringe 19,...,24 und den Rotorkörper, nicht jedoch die Pressfinger 30. Diese zusätzlichen Zugbolzen 32 sind im ganzen Bolzenschaft mit einer Isolation 33 versehen, und auch die Verschraubung an den Stirnseiten des Tragrings erfolgt unter Zwischenlage von Isolierscheiben 34. Ansonsten entspricht der Aufbau demjenigen nach Fig.4 und 5.

Neben seiner Funktion als Pressring oder Pressplatte für den Rotorkörper erfüllt der Tragring, als die aus beabstandeten Ringen 19,..,.24 bestehende Ringanordnung die Funktion der Wickelkopfabstützung. Zu diesem Zweck sind am äusseren Umfang aller Ringe 19,...,24 und über deren Umfang gleichmässig verteilt halbgeschlossene T-förmige Nuten 35 vorgesehen, die axial miteinander fluchten. In diese Nuten 35 sind Gewindelineale 36 eingeschoben. Die Gewindebohrungen liegen dabei im Bereich der Ringe 19,...,24. In die Gewindebohrungen der Gewindelineale 36 sind von radial aussen her Bolzenschrauben 37 mit isolierenden Unterlagen 38 eingeschraubt, welche den Wickelkopf 17 durchsetzen. Die Anordnung und Verteilung dieser Bolzenschrauben 37 geht am besten aus Fig.4 in Verbindung mit Fig.6 hervor, die eine Abwicklung des Wickelkopfes 17 vereinfacht darstellt. Aus Fig.6 ist ersichtlich, dass diese Bolzenschrauben 37 die durch den Wicklungsaufbau bedingten rautenförmigen Durchbrüche 39 im Wickelkopf 17 durchsetzen. Sie können, müssen aber nicht mit einer Isolation im Schaftteil versehen sein. Zwischenlagen 40 und 41 aus Isoliermaterial, z.B. glasfaserverstärktem Kunstharz, zwischen den Schraubenlinealen 36 und den unteren Wicklungsleitern bzw. zwischen dem unteren und oberen Wicklungsleiter erlauben eine gleichmässige Druckverteilung auf die Wicklungsleiter 16 und definiertes Verpannen des Wickelkopfes 17 mit der Ringanordnung 19,...,24, die allen Betriebsbeanspruchungen standhält, ohne dass die Kühlluftströmung durch den Wickelkopf 17 nennenswert beeinträchtigt wird.

Der Rotorkörper 6 und der Tragring 19,....,24 werden so dimensioniert, dass sich beide radial gleichmässig dehnen. Kleine eventuell auftretende Differenzdehnungen zwischen dem Rotorkörper 6 und dem Tragring können durch Federmittel aus Isoliermaterial, z.B. Wellfedern 42 aus glasfaserverstärktem Kunststoff, die in den Nutgrund der Wicklung 16 eingesetzt werden, aufgenommen werden.

### BEZEICHNUNGSLISTE

- 1: Rotornabe
- 2: innerer Nabenteil
- 3: Welle
- 4: äusserer Nabenteil
- 5: Arme
- 6: Rotorkörper
- 7: Blechsegmente von 6
- 8: erste Zugbolzen
- 9: erste Nuten in 4
- 10: zweite Nuten in 6
- 11: Keil mit T-Querschnitt
- 12,13: Treibkeile
- 14: Bund an 4
- 15: Gegenplatte
- 16: Rotorwicklung
- 16a: Leiterenden von 16
- 17: Rotorwickelkopf
- 18: Oesen
- 19-24: Ringe
- 25-27: Zugbolzen
- 28: Muttern
- 29: Distanzstücke
- 30: Pressfinger
- 31: Nutzähne
- 32: isolierte Zugbolzen
- 33: Isolierung von 32
- 34: Unterlagscheiben aus Isoliermaterial
- 35: halbgeschlossene Nuten in 19,...,24
- 36: Gewindelineale
- 37: Bolzenschrauben
- 38: isolierende Unterlagen von 37
- 39: rautenförmige Durchbrüche in 17
- 40,41: isolierende Zwischenlagen
- 42: Wellfedern aus Isoliermaterial

## Patentansprüche

1. Rotor einer elektrischen Maschine, insbesondere Motor-Generator für Pumpspeicherwerke, mit einem auf einer Nabe (4) angeordneten Rotorkörper (6), der aus lamellierten Blechen (7) aufgebaut und durch axial verlaufende erste Zugbolzen (8) zusammengehalten ist, mit Nuten am äusseren Umfang des Rotorkörpers, in welchen eine Rotorwicklung (16) eingelegt und dort gegen Fliehkrafteinwirkung gehalten ist, wobei die aus dem Rotorkörper axial austretenden, den Wickelkopf (17) bildenden Wicklungsenden (16a) durch einen Stützring aufweisende Abstützmittel gegen Fliehkrafteinwirkung gesichert sind, welcher Stützring zugleich Pressplatte für den Rotorkörper ist, dadurch gekennzeichnet, dass an den Endblechen des Rotorkörpers (6) Pressfinger (30) angeordnet sind, dass der Stützring aus mindestens zwei von in Axialrichtung beabstandeten Ringen (19,...,24) besteht, die sich an ihrem Innenumfang auf der Nabe (4) abstützen, wobei die Ringe im achsnahen Abschnitt des Rotorkörpers (6) zusammen mit den Pressfingern (30 )mit dem den Rotorkörper axial durchsetzenden ersten Zugbolzen (8) zusammengespannt sind, dass im achsferneren Abschnitt zweite Zugbolzen (25,26,27) vorgesehen sind, welche nur die besagten Ringe (19,...,24) axial durchsetzen und die Ringe axial zusammenspannen, dass dritte, den Wickelkopf radial durchsetzende Zugbolzen (37) vorgesehen sind, welche zumindest am Aussenumfang des axial gesehen äussersten Ringes (19,...,24) angreifen.

2. Rotor nach Anspruch 1, dadurch gekennzeichnet, dass am Aussenumfang aller Ringe (19,...,24) eine Vielzahl in Umfangsrichtung verteilte, axial verlaufende, miteinander fluchtende, halbgeschlossene Nuten (35) vorgesehen sind, in welche je ein mit radial verlaufenden Gewindebohrungen versehenes Lineal (36) geschoben ist, in welche Gewindebohrungen die besagten dritten Zugbolzen (37) eingeschraubt sind.

3. Rotor nach Anspruch 1 oder 2, dadurch gekennzeichnet, dass der den Pressfingern (30) unmittelbar benachbarte Ring (19) von diesem distanziert ist, und diese Distanz punkuell mit einem Distanzelement ausgefüllt ist, wobei vorzugsweise die den zweiten Zugbolzen (25,26,27) am rotorkörperseitigen Ende zugeordneten Schraubenmuttern (28), deren Höhe der besagten Distanz entspricht, als Distanzelement dienen.

4. Rotor nach Anspruch 3, dadurch gekennzeichnet, dass in Radialrichtung gesehen mindestens zwei zweite Zugbolzen (25,26,27) vorgesehen sind, und dass zur Erzielung einer Vorspannung die Höhe der Distanzelemente, vorzugsweise die der Muttern (28), im achsnahen Abschnitt kleiner ist als im achsferneren Abschnitt.

5. Rotor nach Anspruch 3 oder 4, dadurch gekennzeichnet, dass zur zusätzlichen Verspannung im achsferneren Abschnitt vierte Zugbolzen (32) vorgesehen sind, die sowohl die Ringe (19,...,24) als auch den Rotorkörper (6), nicht jedoch die Pressfinger (30) axial durchsetzen, welche vierte Zugbolzen (32) gegenüber dem Rotorkörper (6) und auch gegenüber den Ringen (19,...,24) elektrisch isoliert sind.

6. Rotor nach einem der Ansprüche 1 bis 5, dadurch gekennzeichnet, dass die Ringe (19,...,24) auf der Nabe (4) in Axial- und in Umfangsrichtung gesichert sind.

7. Rotor nach einem der Ansprüche 1 bis 6, dadurch gekennzeichnet, dass zwischen Rotorwicklung (16) und Nutgrund Federmittel (42) aus Isoliermaterial eingelegt sind.

## Claims

1. Rotor of an electric machine, in particular a motor-generator set for pumped storage units, having a rotor body (6) which is arranged on a hub (4), is constructed from laminated metal sheets (7) and is held together by axially extending first tension bolts (8), having slots on the outer circumference of the rotor body into which a rotor winding (16) is inserted and held there against the effect of centrifugal force, the winding ends (16a), which emerge axially from the rotor body and form the winding overhang (17), being secured against the effect of centrifugal force by supporting means having a support ring which is at the same time a thrust plate for the rotor body, characterized in that press fingers (30) are arranged on the end plates on the rotor body (6), in that the support ring comprises at least two rings (19, ..., 24) which are spaced apart in the axial direction and are supported at their inner circumference on the hub (4), the rings being clamped together in the section of the rotor body (6) near the axis together with the press fingers (30) by means of the first tension bolt (8) axially penetrating the rotor body, in that there are provided in the section further from the axis second tension bolts (25, 26, 27) which axially penetrate only the said rings (19, ..., 24) and clamp the rings together axially, and in that there are provided third tension bolts (37), which radially penetrate the winding overhang and act at least on the outer circumference of the outer ring (19, ..., 24) from an axial point of view.

2. Rotor according to Claim 1, characterized in that there are provided on the outer circumference of all the rings (19, ..., 24) a multiplicity of axially extending, mutually aligned, half-closed slots (35) which are distributed in the circumferential direction and into which a straight edge (36) provided with radially extending threaded bores is pushed in each case, into which threaded bores the said third tension bolts (37) are screwed.

3. Rotor according to Claim 1 or 2, characterized in that the ring (19) immediately adjacent to the press fingers (30) is distanced from the latter, and this distance is filled up at points by a spacer, the spacer preferably being provided as the bolt nuts (28) which are assigned to the second tension bolts (25, 26, 27) at the end on the rotor-body side and whose height corresponds to the said distance.

4. Rotor according to Claim 3, characterized in that seen in the radial direction at least two second tension bolts (25, 26, 27) are provided, and in that for the purpose of achieving pretensioning the height of the spacers, preferably that of the nuts (28), is smaller in the section near the axis than in the section further from the axis.

5. Rotor according to Claim 3 or 4, characterized in that for the purpose of additional tensioning there are provided in the section further from the axis fourth tension bolts (32) which axially penetrate both the rings (19, ..., 24) and the rotor body (6) but not the press fingers (30), which fourth tension bolts (32) are electrically insulated from the rotor body (6) and also from the rings (19, ..., 24).

6. Rotor according to one of Claims 1 to 5, characterized in that the rings (19, ..., 24) are secured on the hub (4) in the axial direction and in the circumferential direction.

7. Rotor according to one of Claims 1 to 6, characterized in that spring means (42) made from insulating material are inserted between the rotor winding (16) and slot bottom.

## Revendications

1. Rotor d'une machine électrique, en particulier moteur-générateur pour une usine d'accumulation par pompage, avec un corps de rotor (6) disposé sur un moyeu (4), qui est construit à partir de tôles stratifiées (7) et qui est maintenu par des premiers boulons tirants (8) s'étendant axialement, avec des encoches sur la périphérie externe du corps de rotor, dans lesquelles un enroulement de rotor (16) est posé et est maintenu contre l'effet de la force centrifuge, dans lequel les extrémités de l'enroulement (16a) sortant axialement du corps de rotor et formant la tête d'enroulement (17), sont protégées contre l'effet de la force centrifuge par un moyen d'appui présentant une bague d'appui, laquelle bague d'appui est également un plateau de serrage pour le corps de rotor, caractérisé en ce que des doigts de serrage (30) sont disposés sur les tôles d'extrémité du corps de rotor (6), en ce que la bague de support se compose d'au moins deux bagues (19,...,24) espacées dans la direction axiale, qui s'appuient à leur périphérie interne sur le moyeu (4), les bagues étant serrées ensemble dans la portion proche de l'axe du corps de rotor (6) avec les doigts de serrage (30) par le premier boulon tirant (8) traversant le corps de rotor axialement, en ce que dans la portion éloignée de l'axe des deuxièmes boulons tirants (25, 26, 27) sont prévus, lesquels traversent seulement lesdites bagues (19,...,24) axialement et serrent axialement les bagues, en ce que des troisièmes boulons tirants (37) traversant radialement la tête d'enroulement sont prévus, lesquels viennent en prise au moins sur la périphérie externe de la bague (19,...,24) la plus extérieure, vu dans le sens axial.

2. Rotor selon la revendication 1, caractérisé en ce que sur la périphérie externe de toutes les bagues (19,...,24), sont prévues une pluralité d'encoches (25) semi-ouvertes, en alignement les unes avec les autres, réparties dans la direction périphérique et s'étendant axialement, dans lesquelles est poussée respectivement une barre (36) pourvue d'alésages filetés s'étendant radialement, dans lesquels alésages filetés sont vissés lesdits troisièmes boulons tirants (37).

3. Rotor selon la revendication 1 ou 2, caractérisé en ce que la bague (19) immédiatement adjacente aux doigts de serrage (30) est espacée de ceux-ci, et cette distance est remplie ponctuellement avec un élément d'espacement, de préférence les écrous (28) associés aux deuxièmes boulons tirants (25, 26, 27) à l'extrémité du côté du corps de rotor, dont la hauteur correspond à ladite distance, servant d'élément d'espacement.

4. Rotor selon la revendication 3, caractérisé en ce que vu dans la direction radiale, au moins deux deuxièmes boulons tirants (25, 26, 27) sont prévus, et en ce que pour l'obtention d'une précontrainte, la hauteur des éléments d'espacement, de préférence celle des écrous (28), est plus petite dans la portion proche de l'axe que dans la portion éloignée de l'axe.

5. Rotor selon la revendication 3 ou 4, caractérisé en ce que pour le serrage supplémentaire dans la portion éloignée de l'axe, on prévoit quatre boulons tirants (32), qui traversent axialement tant les bagues (19,...,24) que le corps de rotor (6) mais toutefois pas les doigts de serrage (30), lesquels quatrièmes boulons tirants (32) sont isolés électriquement par rapport au corps de rotor (6) et également par rapport aux bagues (19,...,24).

6. Rotor selon l'une quelconque des revendications 1 à 5, caractérisé en ce que les bagues (19,...,24) sont fixées dans la direction axiale et périphérique sur le moyeu (4).

7. Rotor selon l'une quelconque des revendications 1 à 6, caractérisé en ce qu'entre l'enroulement du rotor (16) et la base des encoches sont encastrés des moyens de ressort (42) en matériau isolant.
